# EUROPÄISCHE PATENTSCHRIFT

(11) **EP 2 639 937 B1**
(45) Veröffentlichungstag und Bekanntmachung des Hinweises auf die Patenterteilung: **29.10.2014**
(21) Anmeldenummer: 12159930.2
(22) Anmeldetag: 16.03.2012
(51) Int. Cl.: H02K 1/32

(54) **Rotor für eine elektrodynamische Maschine**
Rotor for an electrodynamic machine
Rotor pour une machine électrodynamique

(43) Veröffentlichungstag der Anmeldung: 18.09.2013
(73) Patentinhaber: ALSTOM Renewable Technologies, 38100 Grenoble (FR)
(72) Erfinder: Binder, Susanne, 5430 Wettingen (CH); Schwanda, Josef, 5242 Lupfig (CH); Schwery, Alexander, 5024 Küttigen (CH)
(74) Vertreter: Pesce, Michele

(56) Entgegenhaltungen:
- EP-A2- 1 850 458
- EP-A2- 2 230 748
- WO-A2-2008/119660

## Beschreibung

### TECHNISCHES GEBIET

Die vorliegende Erfindung bezieht sich auf das Gebiet der elektrischen Maschinen. Sie betrifft einen Rotor für eine elektrodynamische Maschine gemäss dem Oberbegriff des Anspruchs 1.

### STAND DER TECHNIK

Stator- und Rotorkörper von elektrodynamischen Maschinen, wie beispielsweise Generatoren, sind meist als Blechkörper ausgebildet, die aus mit Bolzen zusammengehaltenen Blechpaketen von einzelnen Blechsegmenten bestehen. In den Blechkörpern sind am inneren bzw. äusseren Umfang in axialer Richtung verlaufende Nuten zur Aufnahme der entsprechenden Wicklungen angeordnet. Der Rotor einer solchen Maschine ist beispielsweise in der EP-A2-0 736 953 beschrieben.

Bei Maschinen hoher Leistung werden durch Einschieben von Distanzstegen zwischen benachbarte Teilpakete des Blechkörpers radiale Kühlkanäle ausgebildet, durch die ein geeignetes Kühlmedium, in der Regel Kühlluft, strömt, um die in der Wicklung bzw. im Blechkörper während des Betriebes entstehende Wärme abzuführen.

Herkömmliche Distanzstege für Statoren, wie sie beispielsweise aus den Druckschriften EP-A2-0 893 871 oder US-A-4,362,960 oder US-B2-6,583,526 bekannt sind, werden normalerweise als Doppel-T- oder Rechteckprofile aus Stahl, nichtmagnetischem Stahl oder Aluminium hergestellt und auf den Blechsegmenten durch Punktschweissen oder Kleben befestigt.

Für die schnell rotierenden Blechkörper von Rotoren reicht eine Verklebung oder Punktschweissung der Distanzstege aufgrund der hohen Fliehkräfte nicht mehr aus.

Zur Behebung dieses Nachteils schlägt WO-A1 -2008/119 660 vor, die Distanzstege zum Abfangen von an ihnen angreifenden Fliehkräften an Bolzen abzustützen, die sich in axialer Richtung durch den Blechkörper des Rotors erstrecken. Hierdurch ergibt sich eine Befestigung der Distanzelemente am Blechkörper, die auch den grössten auftretenden Fliehkräften sicher standzuhalten vermag. Die Distanzstege umfassen jeweils einen verbreiterten ersten, radial innen liegenden Abschnitt, welcher wenigstens ein Loch zum Durchstecken der axialen Bolzen des Blechkörpers aufweist sowie zwei sich von diesem radial inneren Abschnitt in radialer Richtung nach außen erstreckende zweite Abschnitte in Form radialer Schenkel. Zusätzlich zur Abstützung durch Bolzen können die Distanzstege mittels Schweißung, Punktschweißung oder Verstiftung mit dem benachbarten Blechsegment verbunden sein.

Beim Einsatz dieser Distanzstege hat es sich jedoch als nachteilig erwiesen, dass die von den Stegen umschlossenen Teile der Wicklung und der aufliegenden Blechsegmente nur ungenügend von Kühlmedium beaufschlagt werden. Insbesondere bei Generatoren mit hoher Leistung besteht die Gefahr, dass die freiwerdende Verlustwärme nicht in hinreichender Menge abgeführt werden kann und es somit lokal zu unerwünschten Temperaturerhöhungen innerhalb des Blechpakets und der Wicklung kommen kann.

### DARSTELLUNG DER ERFINDUNG

Es ist daher Aufgabe der Erfindung, einen Rotor der eingangs genannten Art anzugeben, dessen Distanzstege derart ausgebildet sind, dass mit einem geringen Aufwand eine verbesserte Strömungsführung des Kühlmediums, insbesondere innerhalb des von den radial nach außen verlaufenden Schenkeln eingeschlossenen Hohlraums gewährleistet ist, um eine hinreichende Kühlung der dort angeordneten Teile des Blechkörpers und der Wicklung sicherzustellen.

Die Aufgabe wird durch die Gesamtheit der Merkmale des Anspruchs 1 gelöst. Wesentlich für die Erfindung ist, dass die Distanzstege, welche einen verbreiterten ersten Abschnitt mit einem Loch zur Durchführung eines axialen Bolzens des Blechkörpers sowie zwei von diesem Abschnitt beabstandet und im Wesentlichen parallel oder gespreizt radial nach außen abgehenden Schenkeln aufweisen, in einem radial innen liegenden Bereich wenigstens eine Durchtrittsöffnung für das Kühlmedium aufweisen, die es dem Kühlmedium erlauben, in den von den Distanzstegen umgrenzten Hohlraum einzuströmen und diesen möglichst verlustarm zugunsten einer optimalen Aufnahme von Verlustwärme der dort angeordneten Teile zu durchströmen. Gleichzeitig bewirkt diese Maßnahme eine umfassende Umspülung aller Bestandteile der Distanzstege, sowohl seiner außen liegenden wie auch seiner innen liegenden Oberflächen und damit ebenfalls eine verbesserte Kühlung derselben.

Gemäss einer ersten Ausgestaltung der Erfindung sind die Durchtrittsöffnungen in Form einer oder mehrerer nutförmiger Ausnehmungen ausgebildet.

Gemäß einer zweiten Ausgestaltung sind die Durchtrittsöffnungen in Form einer Mehrzahl kammartig ausgeformter Ausnehmungen ausgebildet. Dadurch sind die vom aufliegenden Blechpaket freiliegend zu überbrückenden Distanzen geringer.

In Weiterbildung dieser Ausführungsarten verlaufen die strömungsbegrenzenden Seitenwände der Ausnehmungen spitzwinklig zur Radialen. Die daraus resultierende geringere Strömungsumlenkung ermöglicht dem Kühlmedium ein weniger verlustbehaftetes Einströmen.

Eine weitere Ausgestaltung der Erfindung zeichnet sich dadurch aus, dass die nutförmigen Ausnehmungen eine rechteckförmige oder hohlkehlartige Querschnittsform besitzen.

Nach einer dritten alternativen Ausgestaltung der Erfindung weisen die Schenkel der Distanzstege einen Bereich verminderter Materialdicke auf, welcher oberhalb und/oder unterhalb des Schenkels einen Spalt zu dem benachbarten Blechkörper freigibt, welchen das Kühlmedium durchströmen kann.

Nach einer vierten alternativen Ausgestaltung der Erfindung sind die Durchtrittsöffnungen in Form von Durchgangsbohrungen ausgebildet. Dies gewährleistet eine durchgehende, ununterbrochene Auflagefläche zwischen Distanzsteg und Blechpaket. Vorzugsweise verlaufen die Längsachsen der Bohrungen strömungsgünstig in einem spitzen Winkel zur Radialen.

In Ausgestaltung dieser Ausführungsart kann der Bereich verminderter Materialdicke wellenförmig oder zickzackförmig ausgebildet sein, um den Distanzsteg mechanisch zu stabilisieren und die Strömungsverhältnisse zu beeinflussen.

Die erfindungsgemäßen Distanzstege können einteilig sein, also hergestellt aus einem Stück, beispielsweise durch Heraustrennen aus einem blechartigen

Halbzeug. Hierfür bietet sich insbesondere der Einsatz von modernen Laserschneid- oder Wasserstrahlschneidverfahren an.

Die Distanzstege können aber auch aus mehreren Einzelteilen zusammengesetzt sein.

Die zusammengesetzten Distanzstege umfassen vorzugsweise jeweils ein Oberteil und ein Unterteil, welche jeweils einen verbreiterten ersten Abschnitt mit einem Loch zum Durchstecken der axialen Bolzen des Blechkörpers aufweisen, sowie einen schmalen zweiten Abschnitt in Form eines radialen Fingers, wobei die beiden Teile mit dem ersten Abschnitt und dem darin angeordneten Loch übereinander liegen, während die Finger mit Abstand parallel oder gespreizt nebeneinander liegen und die Schenkel der Distanzstege bilden.

Zum Angleichen an die Gesamtdicke der beiden übereinander liegenden ersten Abschnitte weisen die Schenkel insbesondere eine gegenüber den ersten Abschnitten verdoppelte Dicke auf.

Zur Verdoppelung der Dicke können dabei auf den Schenkel streifenförmige Auflagen aufgebracht sein. Eine weitere Ausgestaltung der Erfindung zeichnet sich dadurch aus, dass am äusseren Umfang der Blechsegmente radiale Nutausschnitte angeordnet sind, welche beim Blechkörper die Wicklungsnuten bilden, und dass sich die Distanzstege in radialer Richtung bis zwischen die Nutausschnitte erstrecken.

Weiterhin ist es von Vorteil, wenn die Distanzstege zusätzlich zur Abstützung an den Bolzen durch Schweissen, Punktschweissen oder Verstiften mit dem Blechsegment verbunden sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in perspektivischer Ansicht ein Rotor-Blechsegment mit an den Bolzen abgestützten ein- und zweischenkeligen Distanzstegen;
- Fig. 2a,b: in zwei Teilfiguren in perspektivischer Ansicht einen einzelnen zweischenkeligen Distanzsteg gemäss einer ersten Ausführungsart der Erfindung in zwei Varianten;
- Fig. 3a,b,c,d: in vier Teilfiguren in perspektivischer Ansicht einen einzelnen Distanzsteg gemäss einer zweiten Ausführungsart der Erfindung in verschiedenen Varianten;
- Fig. 4a,b: in zwei Teilfiguren in perspektivischer Ansicht einen Distanzsteg gemäss der Erfindung in zwei Varianten einer dritten Ausführungsart;
- Fig.5: einen Distanzsteg in einer alternativen Ausführungsart;
- Fig.6a,b,c: in drei Teilfiguren Varianten von mehrteilig zusammengesetzten Distanzstegen gemäss der Erfindung.

### WEGE ZUR AUSFÜHRUNG DER ERFINDUNG

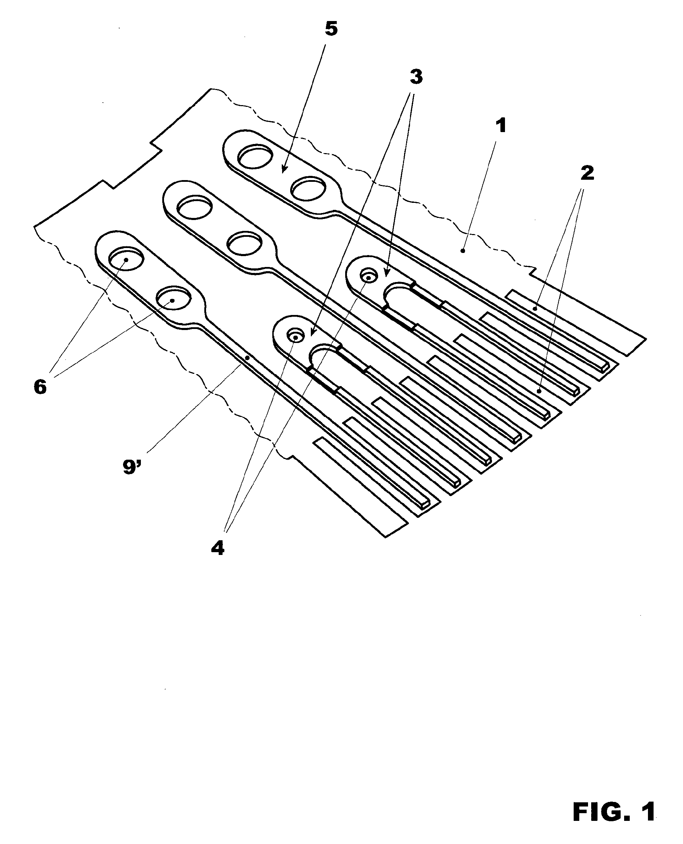

In Fig. 1 ist in einer perspektivischen Ansicht ein Rotor-Blechsegment 1 mit an den Bolzen des Blechkörpers abgestützten ein- und zweischenkeligen Distanzstegen 5 und 3 dargestellt. Das Blechsegment 1 hat die Form eines Kreisringsegments und weist an seinem äusseren Umfang eine Vielzahl von radialen Nutausschnitten 2 auf, die beim kompletten Rotor-Blechkörper die axialen Nuten zur Aufnahme der Rotor-Wicklung bilden. Weiterhin sind im Blechsegment 2 auf mehreren konzentrischen Durchmesserkreisen Bolzenlöcher 4 und 6 vorgesehen, die beim Blechkörper zum Durchstecken entsprechender Bolzen dienen, wie dies in der eingangs genannten Druckschrift WO-A1 -2008/119 660 gezeigt ist. Die grossen Bolzenlöcher 6 sind für die sogenannten Rimbolzen vorgesehen, die kleinen Bolzenlöcher 4 für die Pressbolzen.

Auf der Oberseite des Blechsegments 1 sind in radialer Ausrichtung mehrere - im Beispiel der Fig. 1 insgesamt fünf - Distanzstege 3 und 5 angebracht, die zweigliedrig oder eingliedrig ausgeführt sind. Die Distanzstege 3 und 5 sind so geformt, dass sowohl die axiale Pressung als auch eine optimale Kühlluftführung gewährleistet sind. Die Distanzstege 3 und 5 stützen sich gegen die im Betrieb auftretenden (radialen) Fliehkräfte an den durch die Bolzenlöcher 4 und 6 gesteckten Rim- und Pressbolzen ab. Dies wird dadurch erreicht, dass die Distanzstege 3 und 5 an ihrem jeweils radial inneren Ende einen verbreiterten ersten Abschnitt 7 umfassen, der ein Loch 4 oder zwei in radialer Richtung hintereinander angeordnete Löcher 6 aufweist, die den Bolzenlöchern des Blechsegments 1 entsprechen. Im Blechkörper erstrecken sich so die Rim- und Pressbolzen durch die Löcher 4, 6 im verbreiterten inneren Abschnitt 7 der Distanzstege 3 und 5 hindurch und fixieren sie sicher.

In radialer Richtung nach aussen gerichtet geht der innere Abschnitt 7 der Distanzstege 5 in einen schmalen radialen Finger 9' über, der sich zwischen benachbarten Nutausschnitten 2 hindurch bis zum äusseren Rand des Blechsegments 1 erstreckt. Zwischen benachbarten Distanzstegen 5 bzw. Fingern 9' werden so im Blechkörper radiale Kanäle gebildet, durch die Kühlluft oder ein anderes Kühlmedium strömen kann. Die Distanzstege 5 haben in diesem Beispiel überall dieselbe Dicke. Sie sind vorzugsweise gelasert oder auch massiv aus Stahl, antimagnetischem Stahl oder Aluminium anderweitig bearbeitet.

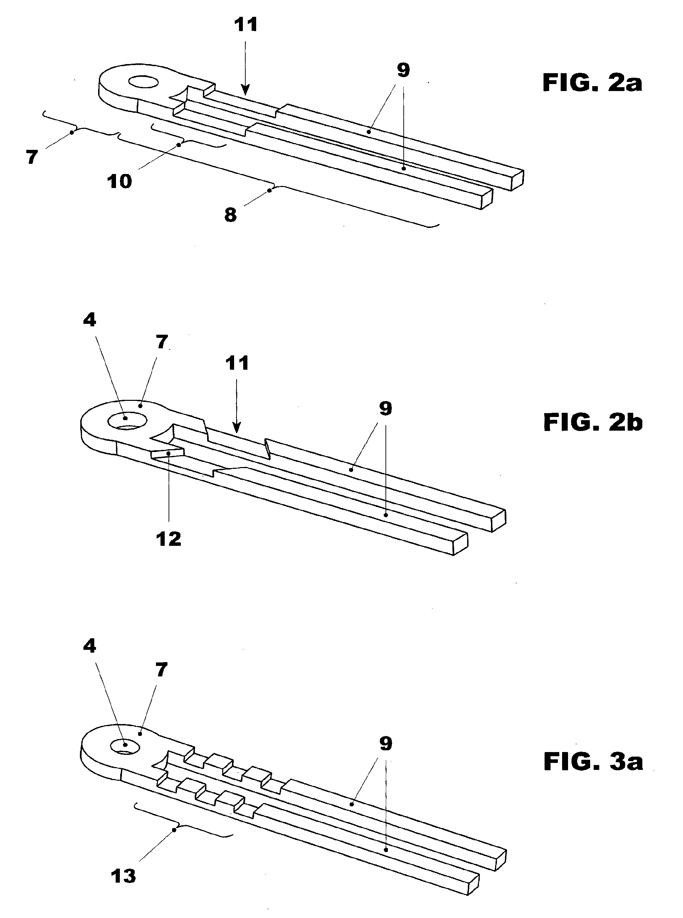

In dieser Bauart haben die Distanzstege 5 im Bereich der Nutausschnitte 2 einen relativ grossen Abstand voneinander: Nur jeder dritte Zahn (Bereich zwischen benachbarten Nutausschnitten 2) des Blechsegments 1 trägt den Finger 9' eines Distanzstegs 5. Um hier eine stärkere Feinunterteilung der Kühlkanäle zu erreichen, sind weitere Distanzstege 3 eingefügt, wie sie in den Fig. 2 bis 6 detailliert wiedergegeben sind.

Diese Distanzstege 3 haben alle die gleiche zangenförmige Grundform, nämlich einen verbreiterten inneren Abschnitt 7, in dem ein Bolzenloch 4 vorgesehen ist, dass mit dem Bolzenloch im anliegenden Blech 1 korrespondiert, sowie von diesem Abschnitt 7 ausgehend zwei voneinander beabstandete, sich in radialer Richtung ersteckende Schenkel 9. Die beiden Schenkel 9 der Distanzstege 3 erstrecken sich ebenfalls zwischen benachbarten Nutausschnitten 2 hindurch bis zum äusseren Rand des Blechsegments 1. Auf diese Weise ist jeder Nutausschnitt 2 an seinen beiden Längsseiten von je einem Schenkel eines Distanzstegs eingefasst.

Anhand der Figuren 2 bis 6 seien nachfolgend alternative Ausführungsarten der erfindungsgemässen Distanzstege unter Würdigung ihrer wesentlichen Unterscheidungsmerkmale kurz näher beschrieben.

Bei der Ausführungsart gemäss Fig. 2a handelt es sich um einen einteiligen, monolithischen Distanzsteg 5. Solche einteiligen Stege können in vorteilhafter Weise in einem Laserschneid- oder Wasserstrahlschneidverfahren aus einem blechförmigen Halbzeug herausgetrennt werden.

In seiner Grundstruktur besteht der Distanzsteg 5 aus einem inneren Abschnitt 7 und einem äusseren Abschnitt 8. Der innere Abschnitt 7 nimmt das Durchgangsloch 4 für den Pressbolzen auf und bildet die Ausgangsbasis für den äusseren Abschnitt 8, welcher regelmässig aus zwei im wesentlichen parallel oder leicht gespreizt radial nach aussen verlaufenden Schenkeln 9 besteht, die die anliegenden Blechsegmente 1 bis hinein in den Bereich der Wicklungsnuten 2 auf Abstand halten. Bolzenloch 4 im Basisteil 7 sichert den Distanzsteg im Zusammenwirken mit dem (nicht dargestellten) Pressbolzen form- und kraftschlüssig gegen die einwirkenden Zentrifugalkräfte.

In einem inneren Bereich 10 des äusseren Abschnitts 8 sind beide Schenkel 9 mit einer nutförmigen, die Stegdicke vermindernden Ausnehmung 11 ausgerüstet. Die

Ausnehmung 11 läuft über die gesamte Stegbreite. Die Aufgabe dieser Ausnehmung 11 ist es, einen Strömungskanal für das Kühlmedium bereitzustellen, damit dieses einen besseren Zugang zu den zwischen den Schenkeln 9 befindlichen und sich während des Betriebs erwärmenden Bauteilen findet. Im Interesse einer möglichst gering verlustbehafteten Strömungsführung können die Seitenwände 12 der Ausnehmung 11 in einem spitzen Winkel zur Radialen angeordnet sein, wie dies aus Fig.2b hervorgeht.

Zur weiteren Verminderung von Druckverlusten können in an sich bekannter Weise Flächen abgeschrägt und Kanten abgerundet sein.

Bei der alternativen Ausführungsart gemäss den Figuren 3a bis 3c wird in die Distanzstege anstelle einer relativ breiten Ausnehmung 11 eine Vielzahl relativ schmaler nutförmiger Ausnehmungen 13 unter Ausbildung einer kammartigen Geometrie eingearbeitet, deren einfachste Form in Fig. 3a wiedergegeben ist.

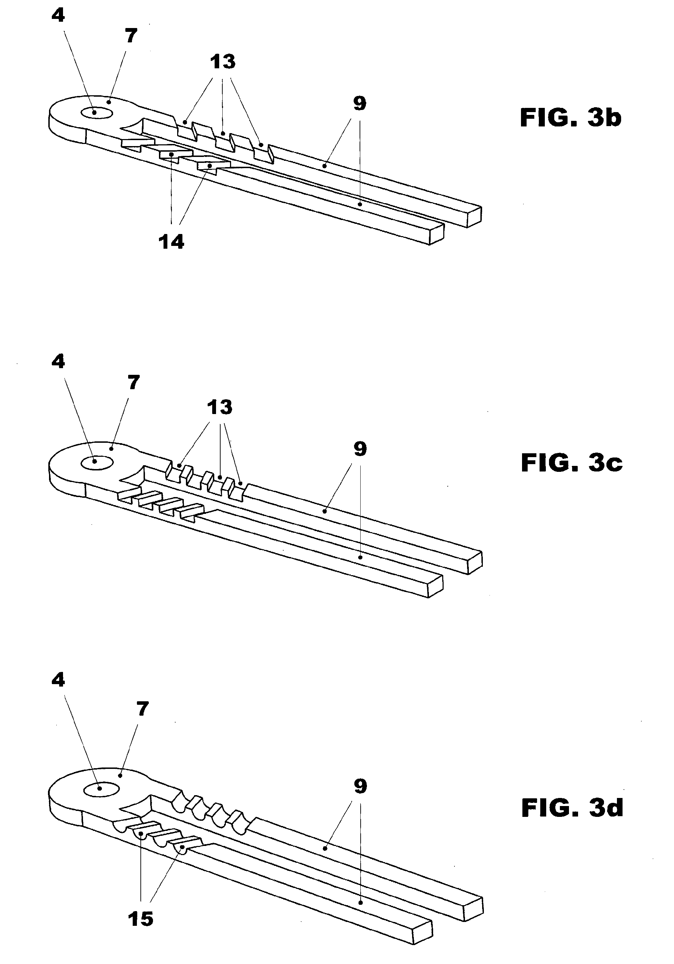

Im Interesse einer günstigen Strömungsführung können auch hier die Seitenwände 14 der Ausnehmungen 13 in einem spitzen Winkel zur Radialen ausgerichtet sein, um eine leichtere Einströmung des Kühlmediums zu erwirken, wie Fig. 3b erkennen lässt.

Die Figuren 3c und 3d stehen dafür, dass die Ausnehmungen 13 dabei in Anzahl, Länge, Tiefe und Querschnittsform variieren können, je nach Erfordernis des Anwendungsfalls.

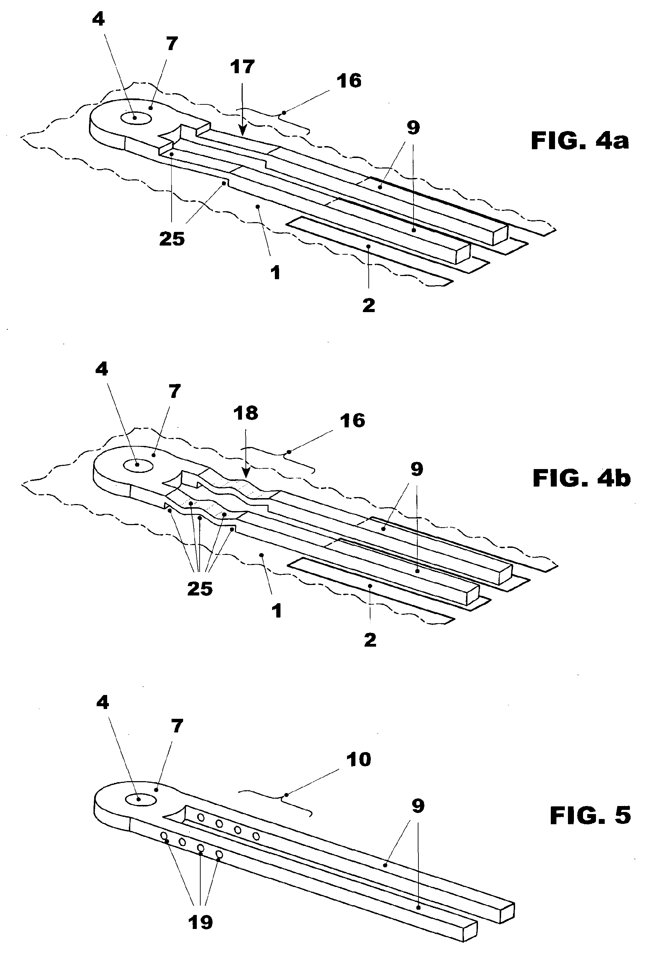

Eine weitere alternative Ausführungsart der Erfindung ist in den Figuren 4a und 4b dargestellt. Hier weisen die Schenkel 9 der Distanzstege 5 einen Bereich verminderter Materialdicke 16 auf. Wie aus den Figuren ersichtlich, ist es auf diese Weise möglich, vielfältige Querschnittsformen und Anordnungen für den Kühlmittelströmungskanal zu erzeugen. So kann dieser Bereich verminderter Materialdicke 16 oben, mittig, unten, ansteigend (Fig. 4a), absteigend, wellenförmig (Fig. 4b), zickzackförmig usw. ausgebildet sein. Somit kann eine Kühlmittelströmung in Anpassung an den Kühlmittelbedarf durch Variation des Kühlmittelspalts 25 gezielt beeinflusst werden, um Vorzugsströmungen auszubilden.

Fig. 5 zeigt eine noch andere Ausführungsart der Erfindung. Danach sind die Distanzstege in einem radial innenliegenden Bereich 10 mit Kühlmittelbohrungen 19 versehen. Mittels einer Anzahl in Grösse, Querschnittsform und Anordnung verschiedenartig anordenbarer Bohrungen 19 kann eine gezielte Anströmung der von den Distanzstegen umgrenzten Komponenten erreicht werden. Diese Ausführungsart hat den Vorteil, dass die Kontaktfläche zu den aufliegenden Blechkörpersegmenten nicht beeinträchtigt wird und über die gesamte Fläche der Distanzstege erhalten bleibt.

Wie an anderer Stelle bereits ausgeführt, können die Distanzstege 3 und 5 einteilig aus einem blechartigen Halbzeug herausgetrennt sein.

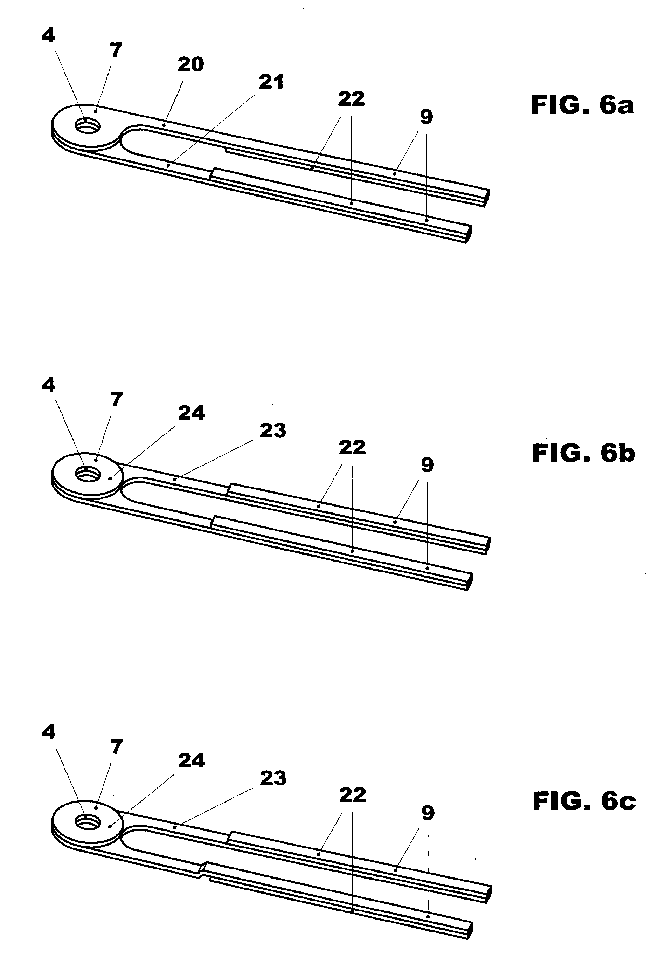

Sie können aber auch mehrteilig zusammengesetzt sein, wie in den Figuren 6a, 6b, 6c gezeigt. Die solcherart strukturierten Distanzstege sind jeweils aus mehreren zumindest teilweise übereinander liegenden Einzelteilen 20, 21, 22 (Fig.6a) oder 22, 23, 24 (Fig. 6b, 6c) zusammengesetzt.

Bei dem Ausführungsbeispiel der Fig. 6a umfassen die mehrteilig zusammengesetzten Distanzstege jeweils ein Oberteil 20 und ein Unterteil 21, die jeweils einen verbreiterten ersten Abschnitt 7 mit einem Loch 4 zum Durchstecken der axialen Bolzen des Blechkörpers aufweisen, sowie einen schmalen zweiten Abschnitt in Form eines radialen Schenkels 9. Ober- und Unterteil 20 und 21 sind wie die Schenkel eines Zirkels zueinander angeordnet, wobei die Bolzenlöcher 4 beider Teile 20, 21 übereinander liegen und die Achse des Zirkels bilden. Die Schenkel 20, 21 sind zum Angleichen an die Gesamtdicke der beiden übereinander liegenden ersten Abschnitte 7 mit einer gegenüber den ersten Abschnitten 7 verdoppelten Dicke ausgeführt. Dies wird gemäss Fig. 6a dadurch erreicht, dass auf die Schenkel 9 Auflagen 22 aufgebracht sind mit der Massgabe, dass die Materialdicke des Schenkels 9 plus der Auflage 22 der Materialdicke des verbreiterten ersten Abschnitts 7 entspricht. Da Oberteil 20 und Unterteil 21 höhenversetzt angeordnet sind, sind die Auflagen 22 beim Oberteil 20 auf der Unterseite und beim Unterteil 21 auf der Oberseite angebracht.

Bei der in Fig. 6b dargestellten Ausführungsform umfassen die mehrteilig zusammengesetzten Distanzstege 3 jeweils ein Oberteil 24 und ein Unterteil 23. Das Unterteil 23 weist einen verbreiterten ersten Abschnitt mit einem Loch 4 zum Durchstecken des axialen Bolzens des Blechkörpers auf, sowie zwei schmale zweite Abschnitte in Form radialer Schenkel, die mit Abstand nebeneinander liegen. Das Oberteil 24 ist als Lochscheibe ausgebildet. Die Lochscheibe 24 und der erste Abschnitt des Unterteils 23 liegen mit dem darin angeordneten Loch 4 übereinander. Ober- und Unterteil können auch die Plätze tauschen.

Zum Angleichen an die Gesamtdicke von erstem Abschnitt und darüber liegender Lochscheibe 24 sind die Schenkel 9 auch hier mit einer gegenüber dem ersten Abschnitt verdoppelten Dicke ausgeführt, die durch streifenförmige Auflagen 22 auf den Schenkeln 9 erreicht wird. Die Auflagen 22 sind auf beiden Schenkeln 9 jeweils auf derselben Seite wie die Lochscheibe 24 aufgebracht.

Sie können aber auch gemäss dem Beispiel aus Fig. 6c an dem einen Schenkel 9 auf dessen Oberseite und an dem anderen Schenkel 9 auf dessen Unterseite angebracht sein, wenn einer der Schenkel 9 durch eine s-förmige Biegung entsprechend höhenversetzt wird.

Die Distanzstege 3 und 5 können zusätzlich zur Abstützung an den Bolzen durch vorzugsweise Punktschweissung mit dem Blechsegment 1 verbunden sein.

### BEZUGSZEICHENLISTE

- 1: Blechsegment (Rotor)
- 2: Nutausschnitt
- 3: Distanzsteg
- 4: Bolzenloch (Pressbolzen)
- 5: Distanzsteg (mit einem Schenkel)
- 6: Bolzenloch (Rimbolzen)
- 7: innerer Abschnitt
- 8: radial nach aussen verlaufender Abschnitt
- 9: Schenkel
- 10: radial innen liegender Bereich von 8
- 11: nutförmige Ausnehmung
- 12: Seitenwand der nutförmigen Ausnehmung 11
- 13: kammartige Ausnehmung
- 14: spitzwinklig verlaufende Seitenwände von 13
- 15: als Hohlkehle ausgebildete nutförmige Durchgänge
- 16: Bereich verminderter Materialdicke der Schenkel 9
- 17: stetig ansteigend verlaufender Bereich 16
- 18: wellen- oder zickzackförmig verlaufender Bereich 16
- 19: Durchgangslöcher für Kühlmedium
- 20: Oberteil
- 21: Unterteil
- 22: Auflage
- 23: Unterteil
- 23: Unterteil
- 24: Oberteil
- 25: Spalt für Kühlmittel

## Patentansprüche

1. Rotor für eine elektrodynamische Maschine, insbesondere einen Hydrogenerator, welcher Rotor einen Blechkörper umfasst, der aus einer Vielzahl von in axialer Richtung hintereinander angeordneten Blechsegmenten (1) zusammengesetzt ist, wobei zwischen in axialer Richtung aufeinander folgenden Blechsegmenten (1) zur Bildung von Kühlkanälen sich im Wesentlichen in radialer Richtung erstreckende Distanzstege (3, 5) eingefügt sind, die Distanzstege (3, 5) zum Abfangen von an ihnen angreifenden Fliehkräften an Bolzen abgestützt sind, die sich in axialer Richtung durch den Blechkörper des Rotors erstrecken, die Distanzstege (3, 5) jeweils einen verbreiterten ersten, radial innenliegenden Abschnitt (7) umfassen, welcher wenigstens ein Loch (4) zum Durchstecken der axialen Bolzen des Blechkörpers aufweist sowie zwei in radialer Richtung nach aussen weisende zweite Abschnitte (8) in Form radialer Schenkel (9), **dadurch gekennzeichnet, dass** die Schenkel (9) der Distanzstege (3) zumindest in einem radial innenliegenden Bereich (10, 13, 16) wenigstens eine Durchtrittsöffnung (11, 13, 19) zum Einströmen eines Kühlmediums in den von den Distanzstegen (3, 5) umgrenzten Hohlraum aufweisen.

2. Rotor nach Anspruch 1, **dadurch gekennzeichnet, dass** die wenigstens eine Durchtrittsöffnung (11, 13, 19) in Form einer oder mehrerer nutförmiger Ausnehmungen (11) ausgebildet ist.

3. Rotor nach Anspruch 2, **dadurch gekennzeichnet, dass** die wenigstens eine Durchtrittsöffnung (11, 13, 19) in Form einer Mehrzahl kammartig angeordneter nutförmiger Ausnehmungen (13) ausgebildet ist.

4. Rotor nach Anspruch 2 oder 3, **dadurch gekennzeichnet, dass** die Seitenwände (12, 14) der einen oder mehreren nutförmigen Ausnehmungen (11, 13) spitzwinkelig zur Radialen verlaufen.

5. Rotor nach Anspruch 2, **dadurch gekennzeichnet, dass** die wenigstens eine nutförmige Ausnehmung (11, 13) eine rechteckförmige Querschnittsform einnimmt.

6. Rotor nach Anspruch 2, **dadurch gekennzeichnet, dass** die wenigstens eine nutförmige Ausnehmung (11, 13) als Hohlkehle (15) ausgebildet ist.

7. Rotor nach Anspruch 1, **dadurch gekennzeichnet, dass** die wenigstens eine Durchtrittsöffnung (11, 13, 19) in Form einer oder mehrerer Durchgangsbohrungen (19) in wenigstens einem der Schenkel (9) ausgebildet ist.

8. Rotor nach Anspruch 7, **dadurch gekennzeichnet, dass** die Durchgangsbohrungen (19) rechtwinklig oder spitzwinklig zur Radialen verlaufen.

9. Rotor nach Anspruch 1, **dadurch gekennzeichnet, dass** zumindest einer der Schenkel (9) der Distanzstege (3) einen oder mehrere Bereiche (16) verminderter Materialdicke aufweist.

10. Rotor nach Anspruch 9, **dadurch gekennzeichnet, dass** die Bereiche (16) verminderter Materialdicke oberhalb und/oder unterhalb des Schenkels (9) einen Spalt (25) zu dem Blechkörper freilassen.

11. Rotor nach Anspruch 9 und 10, **dadurch gekennzeichnet, dass** die Bereiche (16) verminderter Materialdicke wellen- oder zickzackförmig ausgebildet sind.

12. Rotor nach einem oder mehreren der vorhergehenden Ansprüche,
**dadurch gekennzeichnet, dass** die Distanzstege (3) einstückig ausgebildet sind.

13. Rotor nach einem oder mehreren der Ansprüche 1 bis 11, **dadurch**
**gekennzeichnet, dass** zumindest ein Teil der Distanzstege (3) jeweils aus mehreren zumindest teilweise übereinander liegenden Einzelteilen (20, 21, 22, 23, 24) zusammengesetzt ist.

14. Rotor nach Anspruch 13, **dadurch gekennzeichnet, dass** die mehreren zumindest teilweise übereinander liegenden Einzelteile (20, 21, 22, 23; 24) in den Bereichen, in denen die Einzelteile (20, 21, 22, 23, 24) übereinander liegen, dieselbe Dicke aufweisen.

15. Rotor nach Anspruch 13, **dadurch gekennzeichnet, dass** die zusammengesetzten Distanzstege (3) jeweils ein Oberteil (20, 24) und ein Unterteil (21, 23) umfassen, welche jeweils einen verbreiterten ersten Abschnitt (7) mit einem Loch (4) zum Durchstecken der axialen Bolzen des Blechkörpers aufweisen, sowie einen schmalen zweiten Abschnitt in Form eines radialen Schenkels (9), und dass die beiden Teile (20, 21) bzw. (24, 23) mit dem ersten Abschnitt (7) und dem darin angeordneten Loch (4) fluchtend übereinander liegen, während die radialen Schenkel (9) voneinander beabstandet in gleicher horizontaler Ebene nebeneinander verlaufen.

16. Rotor nach Anspruch 15, **dadurch gekennzeichnet, dass** die Schenkel (9) zum Angleichen an die Gesamtdicke der beiden übereinander liegenden ersten Abschnitte (7) eine gegenüber diesen ersten Abschnitten (7) etwa verdoppelte Dicke aufweisen.

17. Rotor nach Anspruch 16, **dadurch gekennzeichnet, dass** zur Verdoppelung der Dicke auf die Schenkel (9) streifenförmige Auflagen (22) aufgebracht sind.

18. Rotor nach Anspruch 17, **dadurch gekennzeichnet, dass** die streifenförmigen Auflagen (22) durch Schweissen, Punktschweissen oder Verstiften mit dem Schenkel (9) verbunden sind.

19. Rotor nach einem der Ansprüche 1 bis 18, **dadurch gekennzeichnet, dass** am äusseren Umfang der Blechsegmente (1) radiale Nutausschnitte (2) angeordnet sind, welche beim Blechkörper die Wicklungsnuten bilden, und dass sich die Distanzstege (3) in radialer Richtung bis zwischen die Nutausschnitte (2) erstrecken.

20. Rotor nach einem der Ansprüche 1 bis 19, **dadurch gekennzeichnet, dass** die Distanzstege (14, 17, 24, 27, 32) zusätzlich zur Abstützung an den Bolzen durch Punktschweissung mit dem Blechsegment (1) verbunden sind.

## Claims

1. Rotor for an electrodynamic machine, especially a hydrogenerator, which rotor comprises a laminated core which is assembled from a number of lamination segments (1) which are arranged in series in the axial direction, wherein for forming cooling ducts duct spacers (3, 5) are inserted between lamination segments (1) which follow each other in the axial direction, the duct spacers (3, 5), for resisting centrifugal forces which act upon them, are supported on bolts which extend through the laminated core of the rotor in the axial direction, the duct spacers (3, 5) always in each case have a widened first, radially inward section (7), having at least one hole (4) for inserting the axial bolts of the laminated core, and two radially outward second sections (8) in the form of radial legs (9), **characterized in that** the legs (9) of the duct spacers (3) have, at least in a radially inward region (10, 13, 16), at least one through opening (11, 13, 19) through which a coolant can be made to flow into the cavity bounded by the duct spacers (3, 5).

2. Rotor according to Claim 1, **characterized in that** the at least one through opening (11, 13, 19) takes the form of one or more slot-shaped recesses (11).

3. Rotor according to Claim 2, **characterized in that** the at least one through opening (11, 13, 19) takes the form of a plurality of slot-shaped recesses (13) arranged in a comb-like fashion.

4. Rotor according to Claim 2 or 3, **characterized in that** the side walls (12, 14) of the one or more slot-shaped recesses (11, 13) run at an acute angle to the radial.

5. Rotor according to Claim 2, **characterized in that** the at least one slot-shaped recess (11, 13) takes on a rectangular cross-sectional shape.

6. Rotor according to Claim 2, **characterized in that** the at least one slot-shaped recess (11, 13) is formed as a hollow flute (15).

7. Rotor according to Claim 1, **characterized in that** the at least one through opening (11, 13, 19) takes the form of one or more through bores (19) in at least one of the legs (9).

8. Rotor according to Claim 7, **characterized in that** the through bores (19) run at right angles or at an acute angle to the radial.

9. Rotor according to Claim 1, **characterized in that** at least one of the legs (9) of the duct spacers (3) has one or more regions (16) of reduced material thickness.

10. Rotor according to Claim 9, **characterized in that** the regions (16) of reduced material thickness leave, above and/or below the leg (9), a gap (25) between the leg and the laminated core.

11. Rotor according to Claims 9 and 10, **characterized in that** the regions (16) of reduced material thickness are in a wave shape or a zig-zag shape.

12. Rotor according to one or more of the preceding claims, **characterized in that** the duct spacers (3) are formed in one piece.

13. Rotor according to one or more of Claims 1 to 11, **characterized in that** at least some of the duct spacers (3) are assembled in each case from a plurality of individual parts (20, 21, 22, 23, 24) which lie at least partially on top of one another.

14. Rotor according to Claim 13, **characterized in that** the plurality of individual parts (20, 21, 22, 23; 24) which lie at least partially on top of one another have, in those regions in which the individual parts (20, 21, 22, 23, 24) lie on top of one another, the same thickness.

15. Rotor according to Claim 13, **characterized in that** the assembled duct spacers (3) comprise in each case an upper part (20, 24) and a lower part (21, 23) which have, in each case, a widened first section (7), having a hole (4) for inserting the axial bolts of the laminated core, and a narrow second section in the form of a radial leg (9), and **in that** the two parts (20, 21) or, respectively, (24, 23) lie on top of one another with the first section (7) and the hole (4) arranged therein in alignment, while the radial legs (9) run next to and at a distance from one another in the same horizontal plane.

16. Rotor according to Claim 15, **characterized in that**, in order to adjust to the overall thickness of the two first sections (7) lying on top of one another, the legs (9) are approximately twice as thick as these first sections (7).

17. Rotor according to Claim 16, **characterized in that**, in order to double the thickness, strip-shaped layers (22) are attached to the legs (9).

18. Rotor according to Claim 17, **characterized in that** the strip-shaped layers (22) are connected to the legs (9) by welding, spot-welding or pinning.

19. Rotor according to one of Claims 1 to 18, **characterized in that** radial slot-like cutouts (2) are arranged on the outer periphery of the lamination segments (1), which cutouts form the winding slots in the laminated core, and **in that** the duct spacers (3) extend in the radial direction as far as between the slot-like cutouts (2).

20. Rotor according to one of Claims 1 to 19, **characterized in that** the duct spacers (14, 17, 24, 27, 32), for support on the bolts, are additionally connected to the lamination segment (1) by spot-welding.

## Revendications

1. Rotor pour une machine électrodynamique, en particulier un hydrogénérateur, lequel rotor comporte un corps en tôle qui est composé d'une pluralité de segments de tôle (1) disposés les uns derrière les autres dans la direction axiale, des entretoises (3, 5) s'étendant essentiellement dans la direction radiale étant, pour former des canaux de refroidissement, insérées entre des segments de tôle (1) se suivant dans la direction axiale, les entretoises (3, 5) étant, pour amortir des forces centrifuges agissant sur celles-ci, supportées sur des boulons qui s'étendent dans la direction axiale à travers le corps en tôle du rotor, les entretoises (3, 5) comportant respectivement une première portion (7) élargie située radialement à l'intérieur, laquelle comprend au moins un trou (4) pour le passage des boulons axiaux du corps en tôle ainsi que deux deuxièmes portions (8) tournées vers l'extérieur dans la direction radiale et se présentant sous la forme de branches radiales (9), **caractérisé en ce que** les branches (9) des entretoises (3) présentent, au moins dans une région (10, 13, 16) située radialement à l'intérieur, au moins une ouverture de passage (11, 13, 19) pour l'entrée d'un fluide de refroidissement dans l'espace creux délimité par les entretoises (3, 5).

2. Rotor selon la revendication 1, **caractérisé en ce que** l'au moins une ouverture de passage (11, 13, 19) est réalisée sous la forme d'un ou de plusieurs évidements (11) en forme de rainure.

3. Rotor selon la revendication 2, **caractérisé en ce que** l'au moins une ouverture de passage (11, 13, 19) est réalisée sous la forme d'une pluralité d'évidements (13) en forme de rainure disposés en forme de peigne.

4. Rotor selon la revendication 2 ou 3, **caractérisé en ce que** les parois latérales (12, 14) du ou des évidements (11, 13) en forme de rainure s'étendent suivant un angle aigu par rapport à la direction radiale.

5. Rotor selon la revendication 2, **caractérisé en ce que** l'au moins un évidement (11, 13) en forme de rainure adopte une forme rectangulaire en section transversale.

6. Rotor selon la revendication 2, **caractérisé en ce que** l'au moins un évidement (11, 13) en forme de rainure est réalisé sous forme de cannelure (15).

7. Rotor selon la revendication 1, **caractérisé en ce que** l'au moins une ouverture de passage (11, 13, 19) est réalisée sous la forme d'un ou de plusieurs alésages traversants (19) dans au moins l'une des branches (9).

8. Rotor selon la revendication 7, **caractérisé en ce que** les alésages traversants (19) s'étendent perpendiculairement ou suivant un angle aigu par rapport à la direction radiale.

9. Rotor selon la revendication 1, **caractérisé en ce qu'**au moins l'une des branches (9) des entretoises (3) présente une ou plusieurs régions (16) d'épaisseur de matériau réduite.

10. Rotor selon la revendication 9, **caractérisé en ce que** les régions (16) d'épaisseur de matériau réduite laissent libre un interstice (25) par rapport au corps en tôle au-dessus et/ou en dessous de la branche (9).

11. Rotor selon les revendications 9 et 10, **caractérisé en ce que** les régions (16) d'épaisseur de matériau réduite sont réalisées sous forme ondulée ou en zigzag.

12. Rotor selon l'une quelconque ou plusieurs des revendications précédentes, **caractérisé en ce que** les entretoises (3) sont réalisées d'un seul tenant.

13. Rotor selon l'une quelconque ou plusieurs des revendications 1 à 11, **caractérisé en ce qu'**au moins une partie des entretoises (3) est respectivement assemblée à partir de plusieurs parties individuelles (20, 21, 22, 23, 24) au moins partiellement superposées.

14. Rotor selon la revendication 13, **caractérisé en ce que** les plusieurs parties individuelles (20, 21, 22, 23 ; 24) au moins partiellement superposées présentent la même épaisseur dans les régions dans lesquelles les parties individuelles (20, 21, 22, 23, 24) sont superposées.

15. Rotor selon la revendication 13, **caractérisé en ce que** les entretoises (3) assemblées comportent respectivement une partie supérieure (20, 24) et une partie inférieure (21, 23) qui présentent respectivement une première portion (7) élargie comprenant un trou (4) pour le passage des boulons axiaux du corps en tôle, ainsi qu'une deuxième portion étroite sous la forme d'une branche radiale (9), et **en ce que** les deux parties (20, 21) respectivement (24, 23) comprenant la première portion (7) et le trou (4) disposé dans celle-ci sont superposées en alignement, tandis que les branches radiales (9) s'étendent à distance l'une de l'autre de manière juxtaposée dans le même plan horizontal.

16. Rotor selon la revendication 15, **caractérisé en ce que** les branches (9) présentent, pour s'adapter à l'épaisseur totale des deux premières portions (7) superposées, une épaisseur approximativement double par rapport à ces premières portions (7).

17. Rotor selon la revendication 16, **caractérisé en ce que** des revêtements (22) en forme de ruban sont appliqués sur les branches (9) en vue du doublement de l'épaisseur.

18. Rotor selon la revendication 17, **caractérisé en ce que** les revêtements (22) en forme de ruban sont reliés à la branche (9) par soudage, par soudage par points ou par goupillage.

19. Rotor selon l'une quelconque des revendications 1 à 18, **caractérisé en ce que** des découpes radiales de type rainure (2) sont disposées sur la périphérie extérieure des segments de tôle (1), lesquelles forment les rainures d'enroulement dans le corps en tôle, et **en ce que** les entretoises (3) s'étendent dans la direction radiale jusqu'entre les découpes de type rainure (2).

20. Rotor selon l'une quelconque des revendications 1 à 19, **caractérisé en ce que** les entretoises (14, 17, 24, 27, 32) sont, en vue du support sur les boulons, en plus reliées au segment de tôle (1) par soudage par points.
